(19) Europäisches Patentamt
European Patent Office
Office européen des brevets

(11) **EP 4 234 613 A1**

(12) **EUROPEAN PATENT APPLICATION**
published in accordance with Art. 153(4) EPC

(43) Date of publication:
**30.08.2023 Bulletin 2023/35**

(21) Application number: **21883054.5**

(22) Date of filing: **30.09.2021**

(51) International Patent Classification (IPC):
**C08J 5/18** (2006.01)    **C08L 67/02** (2006.01)
**B65D 81/18** (2006.01)

(52) Cooperative Patent Classification (CPC):
**B65D 81/18; C08J 5/18; C08L 67/02**

(86) International application number:
**PCT/KR2021/013452**

(87) International publication number:
**WO 2022/085982 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2020 KR 20200137686**

(71) Applicant: **SK microworks Co., Ltd.**
**Suwon-si, Gyeonggi-do 16336 (KR)**

(72) Inventors:
• **YANG, Joo Ho**
  **Suwon-si, Gyeonggi-do 16338 (KR)**
• **KIM, Yong Deuk**
  **Suwon-si, Gyeonggi-do 16338 (KR)**
• **KIM, Chul Kyu**
  **Suwon-si, Gyeonggi-do 16338 (KR)**

(74) Representative: **Dehns**
**St. Bride's House**
**10 Salisbury Square**
**London EC4Y 8JD (GB)**

(54) **HEAT-SHRINKABLE POLYESTER FILM, AND RETORT FOOD INCLUDING SAME**

(57)    A polyester film according to an embodiment is characterized in that the shrinkage properties in a direction perpendicular to a main shrinkage direction are adjusted under certain heat treatment conditions, and thus further deformation of the polyester film can be suppressed even when the polyester film goes through a harsh retort process after being tightly adhered to a container by means of heat shrinkage. Thus, the polyester film according to the embodiment can be effectively applied, as a heat-shrinkable label or packing material, to containers of various products including retort food.

[Fig. 4]

EP 4 234 613 A1

## Description

### Technical Field

Embodiments relate to a heat-shrinkable polyester film and to retort food comprising the same. Specifically, the embodiments relate to a polyester film having shrinkage uniformity applicable to a retort process and to retort food using the same as a heat-shrinkable label or packaging material.

### Background Art

In recent years, as containers for beverages or foods are manufactured in various forms, and there are cases in which full wrapping is applied in order to attract the attention of consumers, heat-shrinkable labels and packaging materials are attracting attention. A heat-shrinkable label or packaging material takes advantage of the feature of a polymer film that tends to shrink to a shape before stretching thereof at a certain temperature or higher once it has been oriented by stretching thereof. In a conventional process of heat shrinkage labeling or packaging, a heat-shrinkable film is printed in a desired design, cut, rolled up, bonded at both ends with an adhesive solvent, loosely wrapped around a container, and then shrunk as heat is applied thereto.

A heat-shrinkable film used in the above is required to have not only such basic properties as thermal resistance, chemical resistance, weatherability, and printability, but also container sealability, heat shrinkage uniformity, sliding characteristics in the longitudinal direction, and crack resistance. Conventionally, polyvinyl chloride films, polystyrene films, polypropylene films, and the like have been used as heat-shrinkable films. In recent years, polyester films having such properties as high thermal resistance and weatherability, the convenience of incineration, and excellent printability have been used as well.

However, since a conventional polyester film has a fast shrinkage speed and a high shrinkage stress, there have been defects caused by non-uniform shrinkage or distortions of a plastic container. Thus, Korean Laid-open Patent Publication No. 2002-0062838 discloses a technique in which 5% by weight or more of a polyester elastomer is added to a heat-shrinkable polyester film to suppress the generation of wrinkles, shrinkage stains, distortions, and the like when the film is used for full wrapping of plastic bottles.

Meanwhile, for retort food for simple cooking or long-term storage, after the food is filled, it is further subjected to a retort process in which thermal treatment is carried out at a high temperature of 90°C to 130°C for 30 minutes to 90 minutes for sterilization. Labels or packaging materials applied to containers for such retort food have a problem in that further deformation takes place due to harsh conditions of the retort process once they have been adhered to the container through a heat shrinkage process.

[Prior Art Document]

(Patent Document 1) Korean Laid-open Patent Publication No. 2002-0062838

### Disclosure of Invention

### Technical Problem

Conventionally, a heat-shrinkable label or packaging material has been applied to a heat shrinkage process once the size of the film for the shape of a container and the shrinkage rate at a specific temperature have been adjusted.

However, this could not prevent deformation that would take place in a direction perpendicular to the main shrinking direction of a label or packaging material when a harsh retort process was carried out after the heat shrinkage process.

Accordingly, the embodiments aim to provide a polyester film in which further deformation that would otherwise take place during a retort process is suppressed and a retort food product comprising the same.

### Solution to Problem

According to an embodiment, there is provided a polyester film, which comprises a copolymerized polyester resin in which two or more diols and an aromatic dicarboxylic acid are polymerized, wherein when the main shrinkage direction is a first direction, and when a direction perpendicular to the main shrinkage direction is a second direction, $\Delta L\%$ defined by the following equation is 2% or less in the second direction:

$$\Delta L\% = [(L1 - L2) / L0] \times 100$$

In the above equation, L0 is the initial dimension, L1 is the dimension upon first thermal treatment for 0.1 minute under the hot air condition of 250°C, and L2 is the dimension upon second thermal treatment for 30 minutes under the conditions of 125°C and 1.4 atm after the first thermal treatment.

According to another embodiment, there is provided retort food, which comprises the polyester film as a heat-shrinkable label or packaging material.

## Advantageous Effects of Invention

Since the shrinkage characteristics of the polyester film according to an embodiment are controlled in a direction perpendicular to the main shrinkage direction under specific thermal treatment conditions, further deformation can be suppressed even if it is further subjected to a harsh retort process once it has been adhered to a container by heat shrinkage.

In addition, such shrinkage characteristics of the polyester film in a desired range can be achieved by controlling the components and contents of a copolymerized polyester resin constituting it and controlling the process conditions in the preparation process.

Accordingly, the polyester film according to the embodiment can be advantageously applied as a heat-shrinkable label or packaging material to containers of various products including beverages and foods.

## Brief Description of Drawings

Fig. 1 shows an example of a flow chart of a process for preparing retort food.
Fig. 2 shows a method of measuring the heat shrinkage rate of a polyester film in Test Example 1.
Fig. 3 shows a method of measuring the skirt ratio of a polyester film in Test Example 2.
Fig. 4 shows a method of measuring the adhesive strength of a polyester film with a solvent in Test Example 3.
Fig. 5 shows a method of measuring the second shrunk length of a polyester film in Test Example 4.

<Explanation of Reference Numerals>

10: heat-shrinkable label
11: sleeve label (before shrinkage)
11a: sleeve label shrunk by first thermal treatment
11b: sleeve label shrunk by second thermal treatment
20: container
100: polyester film (before shrinkage)
100a: polyester film after shrinkage
120: adhesion part
L0: initial length W: width
L1: shrunk length by first thermal treatment
L2: shrunk length by second thermal treatment

## Best Mode for Carrying out the Invention

In the following description of the embodiments, in the case where an element is mentioned to be formed "on" or "under" another element, it means not only that one element is directly formed "on" or "under" another element, but also that one element is indirectly formed on or under another element with other element(s) interposed between them.

For the sake of description, the sizes of individual elements in the appended drawings may be exaggeratedly depicted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, lengths, dimensions, and the like of elements used herein are to be understood as being modified by the term "about" unless otherwise indicated.

In the present specification, a singular expression is understood to encompass a singular or plural expression, interpreted in context, unless otherwise specified.

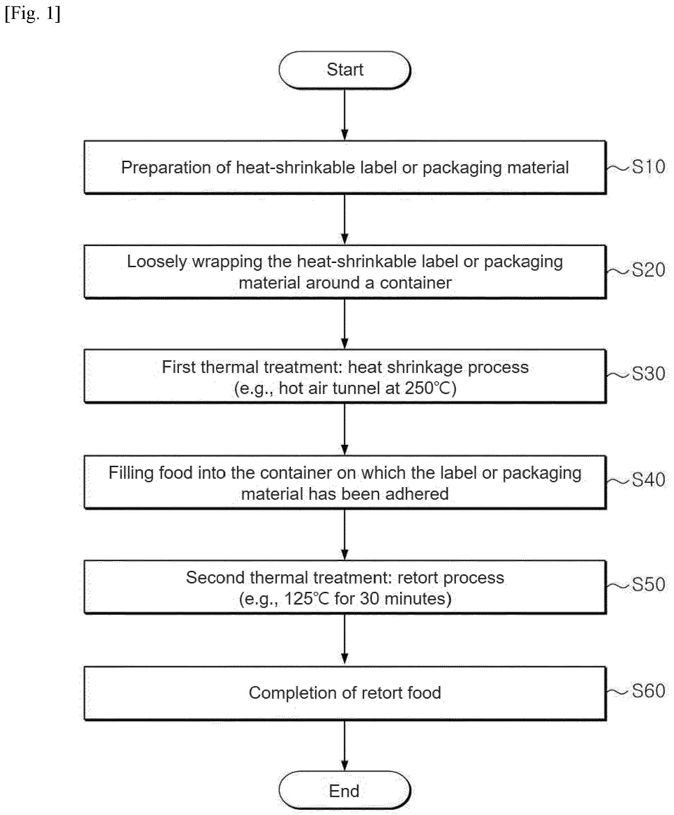

Fig. 1 shows an example of a flow chart of a process for preparing retort food. Referring to Fig. 1, first, a heat-shrinkable film is printed and processed into a sleeve to prepare a heat-shrinkable label or packaging material (S10). Thereafter, the heat-shrinkable label or packaging material is loosely wrapped around a container such as a can (S20), which is subjected to a heat shrinkage process (first thermal treatment) in a hot air tunnel at a high temperature (e.g., 250°C) to have the heat-shrinkable label or packaging material adhered to the container (S30). Thereafter, food is filled in the container (S40), which is subjected to a retort process (second thermal treatment) under high-temperature conditions (e.g., 125°C for 30 minutes) for sterilization (S50) to prepare retort food (S60).

When a conventional heat-shrinkable label or packaging material is applied to the preparation of retort food, there is a problem in that deformation would take place during the further retort process (S50) even though it exhibits excellent shrinkage characteristics and appearance in the heat shrinkage process (S30). In particular, when a conventional heat-shrinkable label or packaging material is rolled in the main shrinkage direction and applied to a container in the form of a sleeve, it is further shrunk in a direction perpendicular to the main shrinkage direction during the retort process (S50), resulting in poor appearance.

Accordingly, the embodiments aim to provide a polyester film in which further deformation that would otherwise take place during a retort process is suppressed.

**Characteristics of the polyester film**

In the polyester film according to an embodiment, when the main shrinkage direction is a first direction, and when a direction perpendicular to the main shrinkage direction is a second direction, ΔL% defined by the following equation may be 2% or less in the second direction, specifically, 0% to 2%, 0% to 1.5%, 0% to 1.0%, or 0% to 0.5%.

$$\Delta L\% = [(L1 - L2) / L0] \times 100$$

In the above equation, L0 is the initial dimension, L1 is the dimension upon first thermal treatment for 0.1 minute under the hot air condition of 250°C, and L2 is the dimension upon second thermal treatment for 30 minutes under the conditions of 125°C and 1.4 atm after the first thermal treatment.

As the value of ΔL% is adjusted as described above, even if the polyester film is further subjected to a harsh retort process after being adhered to a container under specific thermal treatment conditions, further deformation in a direction perpendicular to the main shrinkage direction can be suppressed.

The first direction (main shrinkage direction) of the polyester film may be the transverse direction (i.e., tenter direction, TD) or the longitudinal direction (i.e., machine direction, MD) of the film. As an example, the first direction of the polyester film may be the transverse direction (TD), and the second direction may be the longitudinal direction (MD), but they are not particularly limited thereto.

The initial dimension (L0) in the second direction is not particularly limited, but it may be, for example, 100 mm to 130 mm, specifically 110 mm to 115 mm. In addition, the initial dimension in the first direction is not particularly limited, but it may be, for example, 150 mm to 200 mm, specifically 170 mm to 190 mm.

The polyester film may be cut into a rectangular shape before thermal treatment. In such an event, it may be cut such that the sides of the rectangle correspond to the first direction and the second direction. As a result, the dimension of one side of the rectangle and the dimension of another side perpendicular thereto may correspond to the initial dimensions of the film in the first and second directions, respectively.

The first thermal treatment may be carried out once the polyester film has been rolled in the main shrinkage direction to form a sleeve (cylindrical) shape and then loosely applied to a cylindrical container having a smaller diameter than that of the former. In such an event, an adhesion part having a width of 2 mm to 4 mm may be added to both ends in the first direction of the polyester film, and the adhesion parts at both ends may be laminated to form a sleeve. In addition, the diameter of the cylindrical container (diameter of the bottom side) may be 85% to 95%, specifically 90% to 93%, of the diameter of the sleeve shape. As a specific example, the diameter of the cylindrical container may be 40 mm to 60 mm, more specifically 45 mm to 55 mm. In addition, the length (height) of the cylindrical container may be 90% to 110%, specifically 95% to 105%, of the initial length of the polyester film in the second direction. For example, the length of the cylindrical container may be 100 mm to 130 mm, specifically 110 mm to 120 mm. In addition, the material of the cylindrical container may be a metal such as aluminum. The length of the sleeve (i.e., the dimension in the second direction of the polyester film) may be shorter than the initial length upon the first thermal treatment and may be even shorter upon the second thermal treatment. The length of the sleeve is decreased upon the second thermal treatment as described above, whereby the container is exposed, which may impair the appearance characteristics of the product. However, in the polyester film according to an embodiment, the value of ΔL% in the second direction is adjusted to 2% or less, so that defective shrinkage due to the second thermal treatment can be suppressed.

In the polyester film according to an embodiment, the shrinkage rate in the second direction with respect to temperature may be adjusted within a specific range. For example, when the shrinkage rate (%) of the polyester film upon thermal treatment at a temperature of X°C for 10 seconds is defined as Tx, the ranges of $T_{90}$, $T_{95}$, and $T_{100}$ in the second direction may be adjusted.

Specifically, $T_{90}$ in the second direction may be -25% to 5%, -20% to 0%, or -15% to -3%. $T_{95}$ in the second direction may be -20% to 5%, -15% to 0%, or -13% to -1%. $T_{100}$ in the second direction may be -15% to 5%, -12% to 3%, or -8% to 1%. $T_{110}$ in the second direction may be -5% to 15%, -3% to 10%, or 0% to 8%. $T_{125}$ in the second direction may be -3% to 17%, 0% to 15%, or 3% to 13%.

In particular, the polyester film according to an embodiment satisfies the following Relationship (1) in the second direction.

$$5\% \leq T_{100} - T_{95} - T_{90} \leq 15\% \ ... \ (1)$$

For example, the value of the above Relationship $T_{100} - T_{95} - T_{90}$ may be 5% to 10%, 10% to 15%, or 7% to 12%.

In addition, the polyester film according to an embodiment satisfies the following Relationship (2) in the second direction.

$$T_{100} < 0\% < T_{125} \ ... \ (2)$$

When the above relationships are satisfied, it may be more advantageous for minimizing deformation under the retort process conditions.

In addition, in the polyester film according to an embodiment, the maximum expansion rate in the second direction may be adjusted during thermal treatment near the heat-setting temperature. The maximum expansion rate refers to a ratio that is the most increased relative to the initial stage when the polyester film is thermally treated between 90°C and 100°C. Here, the expansion rate may be calculated as a percentage (%) of the dimension of the increased amount upon thermal treatment relative to the initial dimension of the film, and the maximum expansion rate refers to the maximum value of the expansion rate within the corresponding temperature range. In addition, the maximum expansion rate may be calculated by multiplying the lowest value among the heat shrinkage rates within the temperature range by -1.

For example, the polyester film may have a maximum expansion rate of 0% to 20% or 3% to 15% at a temperature of 90°C to 100°C in the second direction. Specifically, the polyester film may have a maximum expansion rate of 4% to 13% at a temperature of 90°C to 100°C in the second direction. Within the above range, it is more advantageous for minimizing deformation under the retort process conditions.

In addition, when the polyester film according to an embodiment is fixed in the first direction, the shrinkage rate in the second direction may be adjusted within a specific range. For example, when the polyester film is fixed in the first direction and thermally treated at 90°C for 10 seconds, SR% according to the following equation may be 10% or less.

$$SR\% = [(x1 - x2) / y] \times 100$$

In the above equation, x1 is the dimension (mm) before thermal treatment in the second direction, x2 is the dimension (mm) after thermal treatment in the second direction, and y is the dimension (mm) in the first direction. Specifically, x2 is the smallest dimension among the dimensions after thermal treatment in the second direction. The thermal treatment for obtaining the SR% value may refer to, for example, immersing the polyester film in hot water at 90°C for 10 seconds while both ends thereof in the first direction are fixed.

Within the above range, even when the film is fixed in the main shrinkage direction, shrinkage defects or curling in a direction perpendicular thereto are further suppressed, thereby enhancing the appearance. Specifically, SR% may be 7% or less, more specifically, 0% to 10% or 0% to 7%.

In addition, the polyester film may have excellent adhesive strength by a solvent, specifically, an organic solvent. For example, once two sheets of the polyester film have been adhered by tetrahydrofuran (THF), the peel strength may be 300 gf/in or more. Specifically, the peel strength upon adhesion by THF may be 350 gf/in or more, 400 gf/in or more, or 500 gf/in or more, and, more specifically, 300 gf/in to 2,000 gf/in or 300 gf/in to 1,000 gf/in.

In addition, once two sheets of the polyester film have been adhered by 1,3-dioxolane, the peel strength may be 300 gf/in or more. Specifically, the peel strength upon adhesion by 1,3-dioxolane may be 500 gf/in or more, 700 gf/in or more, or 900 gf/in or more, and, more specifically, 300 gf/in to 3,000 gf/in or 300 gf/in to 2,000 gf/in.

The peel strength may be measured by, for example, a method in which a solvent is applied onto a polyester film, another sheet of the polyester film is laminated thereon, which is left for 1 hour while a pressure of 2 kgf is applied to the area where the solvent has been applied, and the two sheets of the polyester film are then delaminated at a speed of 300 mm/minute and an angle of 180°. In addition, the solvent may be applied in a width of 3 mm and a length of about 3 cm.

The polyester film may have a thickness of 10 $\mu$m to 100 $\mu$m. For example, the thickness of the polyester film may be 20 $\mu$m to 80 $\mu$m or 30 $\mu$m to 70 $\mu$m. Within the above range, it may be more advantageous in terms of shrinkage uniformity and printability of the film.

The polyester film may be one uniaxially stretched. For example, the stretching ratio of the polyester film in the main shrinkage direction may be 3 times to 6 times, 3.5 times to 5 times, 4 times to 5 times, 4.2 times to 5 times, 4 times to 4.5 times, or 4.2 times to 4.5 times.

In addition, the polyester film may be heat-set after stretching, specifically heat-set at 85°C to 100°C.

**Composition of the polyester film**

The polyester film according to an embodiment comprises a copolymerized polyester resin. For example, the copolymerized polyester resin may be one in which two or more diols and a dicarboxylic acid are polymerized. Specifically, the copolymerized polyester resin may be one in which three or more diols and a dicarboxylic acid are polymerized.

The diol may comprise an aliphatic diol, an alicyclic diol, an aromatic diol, or a derivative thereof.

The aliphatic diol may be, for example, an aliphatic diol having 2 to 10 carbon atoms, and it may have a linear or branched structure. As a specific example, the aliphatic diol may comprise ethylene glycol, diethylene glycol, neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, a derivative thereof, or any combination thereof.

The dicarboxylic acid may comprise an aromatic dicarboxylic acid, an aliphatic dicarboxylic acid, an alicyclic dicarboxylic acid, or an ester thereof. For example, the dicarboxylic acid may be terephthalic acid, dimethylterephthalic acid, isophthalic acid, naphthalene dicarboxylic acid, orthophthalic acid, adipic acid, azelaic acid, sebacic acid, decanedicarboxylic acid, an ester thereof, or a combination thereof. Specifically, the dicarboxylic acid may comprise at least one selected from the group consisting of terephthalic acid, dimethyl terephthalate, naphthalene dicarboxylic acid, and orthophthalic acid.

According to an embodiment, the copolymerized polyester resin may be one in which two or more diols and an aromatic dicarboxylic acid are polymerized. According to another embodiment, the copolymerized polyester resin may be one in which three or more diols and an aromatic dicarboxylic acid are polymerized. According to still another embodiment, the copolymerized polyester resin may be one in which a diol comprising ethylene glycol and one or more comonomers and an aromatic dicarboxylic acid are polymerized. According to still another embodiment, the copolymerized polyester resin may be one in which a diol comprising ethylene glycol and two or more comonomers and an aromatic dicarboxylic acid are polymerized.

The diol may comprise ethylene glycol in an amount of 50% by mole to 90% by mole based on the total number of moles of the diol. For example, the diol may comprise ethylene glycol in an amount of 60% by mole to 90% by mole, 63% by mole to 85% by mole, or 65% by mole to 83% by mole, based on the total number of moles of the diol.

The diol may comprise the comonomer in an amount of 10% by mole to 50% by mole based on the total number of moles of the diol. For example, the diol may comprise the comonomer in an amount of 10% by mole to 40% by mole, 15% by mole to 37% by mole, or 17% by mole to 35% by mole, based on the total number of moles of the diol.

The diol may comprise, as a comonomer, the diols exemplified above except for ethylene glycol. For example, the diol may comprise, as a comonomer, diethylene glycol, 1,4-cyclohexanedimethanol, 1,3-propanediol, 1,2-octanediol, 1,3-octanediol, 2,3-butanediol, 1,3-butanediol, 1,4-butanediol, 1,5-pentanediol, neopentyl glycol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, or a combination thereof. Specifically, the diol may comprise at least one selected from the group consisting of neopentyl glycol, cyclohexanedimethanol, and diethylene glycol as a comonomer.

Specifically, the diol may comprise diethylene glycol as a comonomer. The content of diethylene glycol in the diol may be 1% by mole to 15% by mole, for example, 1% by mole to 10% by mole, 1% by mole to 5% by mole, 5% by mole to 10% by mole, or 3% by mole to 7% by mole.

As an example, the diol may comprise ethylene glycol in an amount of 65% by mole to 83% by mole and diethylene glycol in an amount of 1% by mole to 15% by mole.

In addition, the diol may comprise, as a comonomer, at least one of neopentyl glycol and cyclohexanedimethanol. The content of neopentyl glycol and/or cyclohexanedimethanol in the diol may be 1% by mole to 50% by mole, for example, 10% by mole to 40% by mole, 10% by mole to 30% by mole, 20% by mole to 40% by mole, 20% by mole to 30% by mole, 20% by mole to 25% by mole, or 25% by mole to 30% by mole.

Specifically, the diol may comprise, as a comonomer, at least one selected from neopentyl glycol and cyclohexanedimethanol; and diethylene glycol.

As an example, the diol may comprise, as a comonomer, at least one selected from neopentyl glycol and cyclohexanedimethanol in an amount of 20% by mole to 30% by mole; and diethylene glycol in an amount of 1% by mole to 15% by mole.

The dicarboxylic acid may comprise terephthalic acid or dimethyl terephthalate in an amount of 80% by mole or more, 90% by mole or more, or 95% by mole or more, based on the total number of moles of the dicarboxylic acid. However, the dicarboxylic acid may comprise almost no isophthalic acid. For example, the content of isophthalic acid in the dicarboxylic acid may be 5% by mole or less, 3% by mole or less, or 1% by mole or less.

As an example, the diol may comprise, as a comonomer, at least one selected from the group consisting of neopentyl glycol, cyclohexanedimethanol, diethylene glycol, and a combination thereof in an amount of 20% by mole to 40% by mole, and the content of isophthalic acid in the dicarboxylic acid may be less than 1% by mole.

As another example, the diol may comprise at least one selected from neopentyl glycol and cyclohexanedimethanol in an amount of 20% by mole to 30% by mole, and the content of isophthalic acid in the aromatic dicarboxylic acid may be less than 1% by mole.

As a specific example, the copolymerized polyester resin may be a glycol-modified polyethylene terephthalate (PETG).

The copolymerized polyester resin may further comprise an alcohol other than the diol, for example, a monohydric alcohol. For example, the monohydric alcohol may be methanol, ethanol, isopropanol, allyl alcohol, or benzyl alcohol. Specifically, the copolyester resin may comprise the monohydric alcohol in an amount of 10 parts by weight to 40 parts by weight or 15 parts by weight to 30 parts by weight based on 100 parts by weight of the diol.

## Process for preparing a polyester film

The polyester film according to an embodiment may be prepared by a process, which comprises preparing a copolymerized polyester resin; melting and casting the copolymerized polyester resin to obtain a film; and preheating and stretching the cast film and then heat-setting it.

Here, the composition and process conditions are adjusted such that the polyester film finally produced by the above process satisfies the characteristics (shrinkage characteristics and the like) as described above. Specifically, in order for the final polyester film to satisfy the characteristics as discussed above, the composition of the copolymerized polyester resin is adjusted, the extrusion and casting temperatures of the copolymerized polyester resin are adjusted, the preheating temperature, the stretching ratio in each direction, the stretching temperature, the stretching speed, and the like at the time of stretching are adjusted, or thermal treatment and relaxation is carried out after stretching while the thermal treatment temperature and relaxation rate are adjusted.

Hereinafter, each step will be described in more detail.

The copolymerized polyester resin may be prepared through a transesterification reaction and a polycondensation reaction. In such an event, the components and contents of the diol and dicarboxylic acid used are as exemplified above.

Thereafter, the copolymerized polyester resin may be melted at a temperature of 260°C to 300°C or 270°C to 290°C and then extruded and cast to obtain a film.

The cast film may be conveyed at a speed of 10 m/minute to 110 m/minute or 50 m/minute to 90 m/minute to pass through a roll and then preheated.

The preheating may be carried out, for example, at 90°C to 120°C for 0.01 minute to 1 minute. Specifically, the preheating temperature may be 95°C to 115°C or 97°C to 113°C, and the preheating time may be 0.05 minute to 0.5 minute or 0.08 minute to 0.2 minute, but they are not limited thereto.

Thereafter, the film may be stretched in a first direction. For example, the stretching may be carried out at a temperature lower than the preheating temperature by at least 20°C in a first direction by 3 times to 5 times. Specifically, the stretching may be carried out at a stretching temperature of 60°C to 90°C, 70°C to 90°C, or 75°C to 85°C, in a first direction by 3 times to 4.5 times, 3.5 times to 4.5 times, 4 times to 5 times, 4.2 times to 5 times, 4 times to 4.5 times, or 4.2 times to 4.5 times, but it is not limited thereto. The stretching may be further carried out in a second direction perpendicular to the first direction. For example, it may be carried out in a second direction at a stretching ratio of 1.1 times to 2 times, specifically, 1.1 times to 1.5 times, as needed.

After stretching, the film may be heat-set. For example, it may be carried out at 70°C to 95°C for 0.01 minute to 1 minute. For example, the heat-setting temperature may be 75°C to 95°C, 75°C to 90°C, 80°C to 90°C, 85°C to 95°C, or 85°C to 90°C, and the heat-setting time may be 0.05 minute to 0.5 minute or 0.08 minute to 0.2 minute. But they are not limited thereto.

Specifically, the difference between the preheating temperature and the heat-setting temperature may be 10°C to 40°C, more specifically, 13°C to 35°C, 11°C to 34°C, 15°C to 34°C, or 20°C to 30°C.

**Effects and uses**

Since the shrinkage characteristics of the polyester film according to an embodiment are controlled in a direction perpendicular to the main shrinkage direction under specific thermal treatment conditions, further deformation can be suppressed even if it is further subjected to a harsh retort process once it has been adhered to a container by heat shrinkage. In addition, such shrinkage characteristics of the polyester film can be achieved in a desired range by controlling the components and contents of a copolymerized polyester resin constituting it and controlling the process conditions in the preparation process.

Accordingly, the polyester film according to the embodiment can be advantageously applied as a heat-shrinkable label or packaging material to containers of various products including beverages and foods. The heat-shrinkable label or packaging material according to an embodiment comprises the polyester film, and it may further comprise a printing layer, a dye, an adhesive, or the like.

In addition, the present invention provides retort food, which comprises the polyester film according to an embodiment as a heat-shrinkable label or packaging material.

**Mode for the Invention**

Hereinafter, although embodiments are described, the scope to be implemented is not limited thereto.

**Examples and Comparative Examples: Preparation of a polyester film**

(1) Preparation of a copolymerized polyester resin

An autoclave equipped with a stirrer and a distillation column was charged with terephthalic acid as a dicarboxylic acid and ethylene glycol and a comonomer as a diol. 0.07 part by weight of manganese acetate as a transesterification catalyst relative to the weight of the dicarboxylic acid was added thereto, followed by heating the mixture to 220°C and the removal of methanol produced as a byproduct to carry out the reaction.

Upon completion of the transesterification reaction, 0.07 part by weight of silica having an average particle diameter of 0.28 $\mu$m was added, and 0.4 part by weight of trimethyl phosphate as a stabilizer was added, relative to 100 parts by weight of the dicarboxylic acid. After 5 minutes, 0.035 part by weight of antimony trioxide and 0.005 part by weight of tetrabutylene titanate as a polymerization catalyst were added, followed by stirring for 10 minutes. Subsequently, the reaction mixture was transferred to a second reactor equipped with a vacuum apparatus. The pressure was gradually reduced while the temperature was raised to 285°C, and the polymerization was carried out for about 210 minutes to thereby prepare a composition comprising a copolymerized polyester resin.

(2) Preparation of a film

The composition comprising a copolymerized polyester resin obtained in step (1) was extruded through a T-die at 270°C and then cooled to thereby obtain an unstretched sheet, which was passed through a roll to adjust the thickness. The unstretched sheet was preheated at 100 to 110°C for 0.1 minute while it was conveyed at a speed of 55 m/minute and stretched 4.0 to 4.5 times in the transverse direction (TD) at a temperature lower than that by at least 20°C. The stretched sheet was heat set for 0.1 minute to prepare a polyester film having a thickness of 40 $\mu$m.

The components and contents of the comonomers and the process conditions used in the Examples and Comparative Examples are summarized in the table below.

[Table 1]

| | Comonomer content (% by mole) | | | | TD stretching ratio | Heat setting Temp. (°C) |
|---|---|---|---|---|---|---|
| | NPG | CHDM | DEG | IPA | | |
| Ex. 1 | 24 | - | 5 | - | 4.5 | 92 |
| Ex. 2 | - | 22 | 10 | - | 4.5 | 92 |
| Ex. 3 | - | 30 | - | 2 | 4.5 | 94 |
| Ex. 4 | 26 | - | - | 5 | 4.5 | 90 |

(continued)

|  | Comonomer content (% by mole) | | | | TD stretching ratio | Heat setting Temp. (°C) |
|---|---|---|---|---|---|---|
|  | NPG | CHDM | DEG | IPA | | |
| Ex. 5 | 30 | - | - | 5 | 4.5 | 87 |
| C. Ex. 1 | 17 | - | - | 5 | 4.15 | 75 |
| C. Ex. 2 | 15.8 | - | 5.3 | 1.8 | 4.15 | 84 |
| C. Ex. 3 | - | 21 | - | 9 | 4.5 | 83 |
| C. Ex. 4 | 17 | - | - | 5 | 4.15 | 94 |
| NPG: neopentyl glycol, CHDM: 1,4-cyclohexanedimethanol, DEG: diethylene glycol, IPA: isophthalic acid | | | | | | |

**Test Example 1: Heat shrinkage rate**

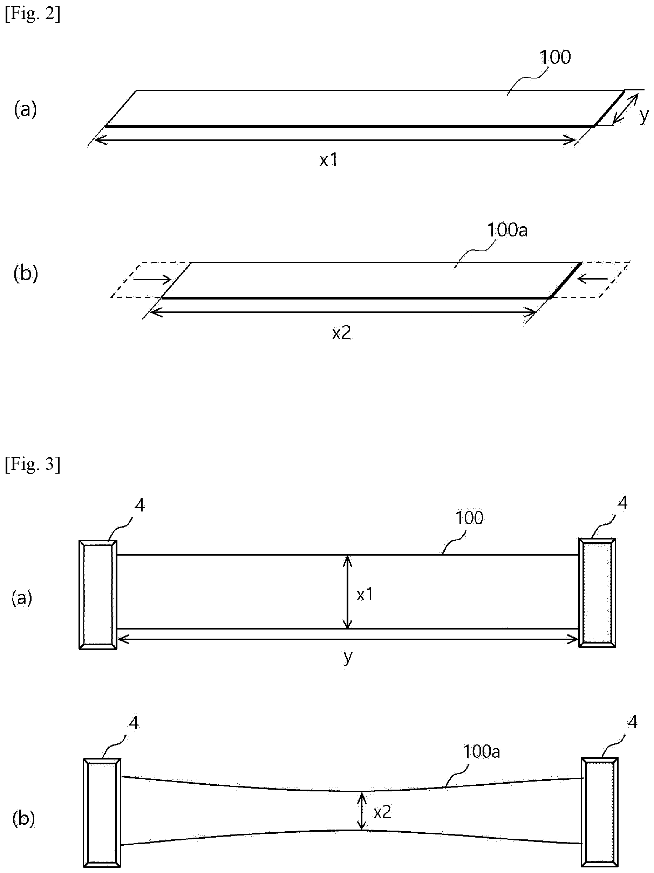

Fig. 2 shows a method of measuring the shrinkage rate of a polyester film. Referring to Fig. 2, a polyester film (100) was cut to have an initial dimension (x1) of 300 mm in the direction to be measured and a dimension (y) of 15 mm in the direction perpendicular thereto. It was immersed in a heated water bath (70-95°C) or glycerin bath (100-125°C) for 10 seconds, and the dimension (x2) of the shrunk polyester film (100a) was measured and calculated according to the following equation.

$$\text{Shrinkage rate (\%)} = [(x1 - x2) / x1] \times 100$$

The shrinkage rate (%) was obtained in the longitudinal direction (MD), which is perpendicular to the main shrinkage direction of the film. The results are shown in the table below. In addition, when it was immersed in a water bath or glycerin bath at X°C for 10 seconds and the MD shrinkage rate is Tx, $T_{100}$ - $T_{95}$ - $T_{90}$ (%) was calculated and shown in the table below.

[Table 2]

|  | MD shrinkage (%) | | | | | | | | $T_{100}$ - $T_{95}$ - $T_{90}$(%) | Max. MD expansion rate (%) |
|---|---|---|---|---|---|---|---|---|---|---|
|  | 70°C | 75°C | 80°C | 90°C | 95°C | 100°C | 110°C | 125°C | | |
| Ex. 1 | -0.7 | -1.7 | -4 | -6 | -5.3 | -4.7 | 0 | 3.3 | 6.6 | 6 |
| Ex. 2 | -2.4 | -4 | -5 | -5 | -5.3 | -5.3 | 3.3 | 8.2 | 5 | 5.3 |
| Ex. 3 | 0 | -0.7 | -2 | -4 | -11 | -6 | 7.9 | 12.5 | 9 | 11 |
| Ex. 4 | 0 | -0.7 | -3 | -8 | -4 | -0.7 | 2.1 | 5.2 | 11.3 | 8 |
| Ex. 5 | -2 | -4 | -6 | -13 | -5 | -2 | 7.8 | 11.3 | 16 | 13 |
| C. Ex. 1 | 0.7 | -2 | -1.7 | 2.3 | 3.3 | 3.3 | 3.3 | 4.4 | -2.3 | -3.3 |
| C. Ex. 2 | -1 | 0 | -1 | 0 | 1.3 | 3 | 3.3 | 5.6 | 1.7 | -3 |
| C. Ex. 3 | 0 | -3 | -3 | 2 | 3 | 5 | 6.2 | 7.6 | 0 | -5 |

(continued)

| | | MD shrinkage (%) | | | | | | | $T_{100}$ - $T_{95}$ - $T_{90}$(%) | Max. MD expansion rate (%) |
|---|---|---|---|---|---|---|---|---|---|---|
| | 70°C | 75°C | 80°C | 90°C | 95°C | 100°C | 110°C | 125°C | | |
| C. Ex. 4 | 0 | 0 | -0.3 | -5.3 | -4 | -1 | 3.9 | 6.1 | 8.3 | 5.3 |

As can be seen from the above table, in the films of Examples 1 to 5, the shrinkage rate in the main shrinkage direction with respect to temperature, the difference in shrinkage rate, and the maximum expansion rate were all within the preferred ranges.

**Test Example 2: Skirt ratio**

Fig. 3 shows a method of measuring the skirt ratio of a polyester film. Referring to Fig. 3, a polyester film (100) was cut to an initial dimension (x1) of 60 mm in the direction to be measured and fixed to heat setting frames (4) having a width (y) of 115 mm. It was immersed in a water bath at 90°C for 10 seconds, and the reduced dimension (x2) was then measured. In this Test Example, it was fixed in the transverse direction (TD) as the main shrinkage direction, and the dimension after shrinkage in the longitudinal direction (MD) perpendicular thereto was measured for the calculation according to the following equation.

$$\Delta SR \ (mm) = x1 \ (mm) - x2 \ (mm)$$

$$SR\% \ (\%) = [\Delta SR \ (mm) \ / \ y \ (mm)] \times 100$$

**Test Example 3: Solvent adhesive strength**

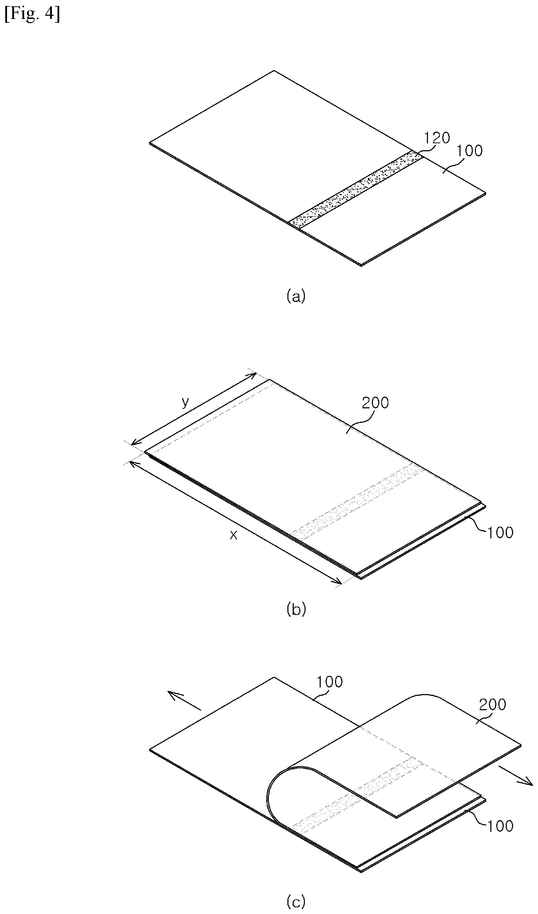

Fig. 4 shows a method of measuring the adhesive characteristics of a polyester film with a solvent. Referring to Fig. 4, an organic solvent (THF or 1,3-dioxolane) was applied to a polyester film (100) in the form of a band having a width of 3 mm to form an adhesion part (120), and another polyester film (200) was laminated thereto, and a weight of 2 kg was placed on the attached area. After 1 hour, the adhesive force was measured while the two sheets of the polyester film were peeled off at 180 degrees at a rate of 300 mm/minute. The polyester film was cut to a rectangle having dimensions (x, y) of 9 cm $\times$ 3 cm.

**Test Example 4: Second shrunk length**

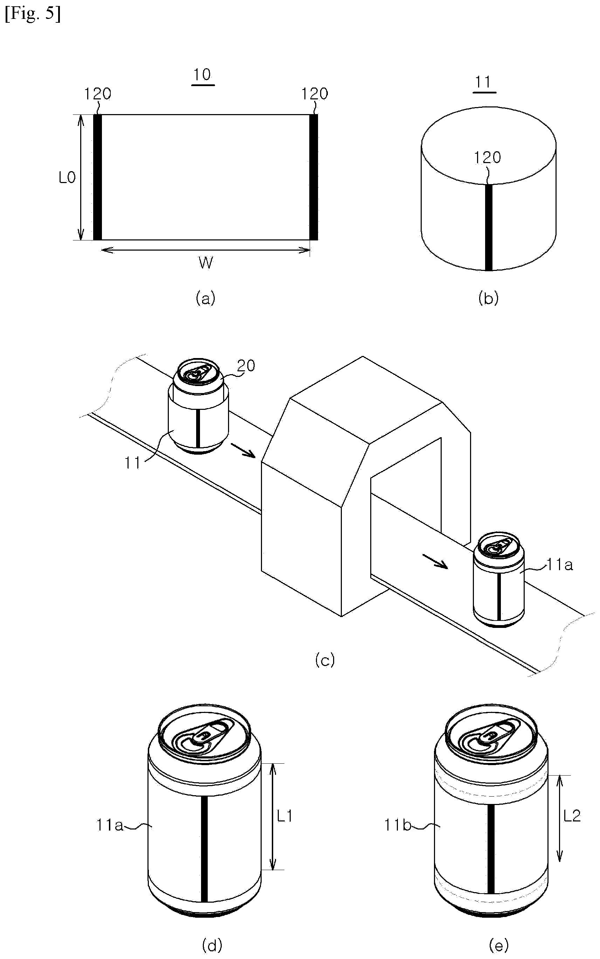

Fig. 5 shows a method of measuring the shrunk length of a polyester film. Referring to Fig. 5, an adhesion part (120) having a width of 3 mm was provided at both ends of a polyester film in the transverse direction (TD) as the main shrinkage direction, and it was cut to a width (W) of 180 mm and a length (L0) of 112 mm excluding the adhesion parts (120). As a result, a heat-shrinkable label (10) was prepared. Referring to Fig. 5(b), the heat-shrinkable label (10) was rolled, and the adhesion parts (120) at both ends thereof were adhered to prepare a sleeve label (11). Referring to Fig. 5(c), the sleeve-shaped label (11) was loosely wrapped around a can (20) having a diameter (D) of 52 mm and a height of 116 mm, which was passed through a hot air tunnel (temperature: 250°C, length: 2.5 m, speed: 250 BPM) for 0.1 minute for first thermal treatment. Referring to Fig. 5(d), the length (L1) of the sleeve label (11a) shrunk by the first thermal treatment was measured. Thereafter, it was subjected to second thermal treatment as a retort process for 30 minutes at 125°C and 1.4 atm using an autoclave. Referring to Fig. 5(e), the length (L2) of the sleeve label (11b) shrunk by the second thermal treatment was measured. The values measured above were used for the calculation according to the following equation.

$$\Delta L\% = [\Delta L \ / \ L0] \times 100, \ \Delta L = L1 - L2$$

The results of the above test examples are shown in the table below.

[Table 3]

| | ΔL (mm) | ΔL% (%) | ΔSR (mm) | SR% (%) | Solvent adhesive strength (gf/in) | |
|---|---|---|---|---|---|---|
| | | | | | THF | 1,3-dioxolane |
| Ex. 1 | 1.7 | 1.5 | 8 | 7.0 | 412 | 870 |
| Ex. 2 | 1.4 | 1.2 | 8 | 7.0 | 405 | 800 |
| Ex. 3 | 0.4 | 0.4 | 6 | 5.2 | 584 | 1,060 |
| Ex. 4 | 1.5 | 1.3 | 7 | 6.0 | 355 | 774 |
| Ex. 5 | 0.2 | 0.2 | 6 | 5.2 | 650 | 1158 |
| C. Ex. 1 | 3.5 | 3.1 | 18 | 15.7 | 15 | 800 |
| C. Ex. 2 | 4 | 3.6 | 8 | 7.0 | 16 | 547 |
| C. Ex. 3 | 2.3 | 2.1 | 12 | 10.4 | 300 | 524 |
| C. Ex. 4 | 3 | 2.7 | 15 | 13.0 | 10 | 211 |

As can be seen from the above table, in the polyester films of Examples 1 to 5, the skirt ratio, second shrunk length, and adhesive strength by a solvent were all within the preferred ranges.

## Claims

1. A polyester film, which comprises a copolymerized polyester resin in which two or more diols and an aromatic dicarboxylic acid are polymerized, wherein when the main shrinkage direction is a first direction, and when a direction perpendicular to the main shrinkage direction is a second direction, ΔL% defined by the following equation is 2% or less in the second direction:

$$\Delta L\% = [(L1 - L2) / L0] \times 100$$

in the above equation, L0 is the initial dimension, L1 is the dimension upon first thermal treatment for 0.1 minute under the hot air condition of 250°C, and L2 is the dimension upon second thermal treatment for 30 minutes under the conditions of 125°C and 1.4 atm after the first thermal treatment.

2. The polyester film of claim 1, wherein when the shrinkage rate (%) of the polyester film upon thermal treatment at a temperature of X°C for 10 seconds is defined as Tx, the following Relationship (1) in the second direction is satisfied:

$$5\% \leq T_{100} - T_{95} - T_{90} \leq 15\% \ ... \ (1).$$

3. The polyester film of claim 1, wherein when the shrinkage rate (%) of the polyester film upon thermal treatment at a temperature of X°C for 10 seconds is defined as Tx, the following Relationship (2) in the second direction is satisfied:

$$T_{100} < 0\% < T_{125} \ ... \ (2).$$

4. The polyester film of claim 1, wherein the polyester film has a maximum expansion rate of 4% to 13% at a temperature of 90°C to 100°C in the second direction.

5. The polyester film of claim 1, wherein when the polyester film is fixed in the first direction and thermally treated at 90°C for 10 seconds, SR% according to the following equation is 10% or less:

$$SR\% = [(x1 - x2) / y] \times 100$$

in the above equation, x1 is the dimension (mm) before thermal treatment in the second direction, x2 is the dimension (mm) after thermal treatment in the second direction, and y is the dimension (mm) in the first direction.

6.  The polyester film of claim 1, wherein once two sheets of the polyester film have been adhered by tetrahydrofuran (THF), the peel strength is 300 gf/in or more.

7.  The polyester film of claim 1, wherein the diol comprises ethylene glycol in an amount of 65% by mole to 83% by mole and diethylene glycol in an amount of 1% by mole to 15% by mole.

8.  The polyester film of claim 1, wherein the diol comprises at least one selected from neopentyl glycol and cyclohexanedimethanol in an amount of 20% by mole to 30% by mole, and the content of isophthalic acid in the aromatic dicarboxylic acid may be less than 1% by mole.

9.  The polyester film of claim 1, wherein the polyester film is heat-set at 85°C to 100°C.

10. The polyester film of claim 1, wherein the polyester film is for use as a heat-shrinkable label or packaging material.

11. Retort food, which comprises the polyester film of claim 1 as a heat-shrinkable label or packaging material.

[Fig. 1]

```
                    ┌─────────────┐
                    │    Start    │
                    └──────┬──────┘
                           │
                           ▼
   ┌──────────────────────────────────────────────────┐
   │  Preparation of heat-shrinkable label or packaging material  │─ S10
   └──────────────────────────────────────────────────┘
                           │
                           ▼
   ┌──────────────────────────────────────────────────┐
   │  Loosely wrapping the heat-shrinkable label or packaging   │─ S20
   │            material around a container                     │
   └──────────────────────────────────────────────────┘
                           │
                           ▼
   ┌──────────────────────────────────────────────────┐
   │    First thermal treatment: heat shrinkage process         │─ S30
   │         (e.g., hot air tunnel at 250℃)                     │
   └──────────────────────────────────────────────────┘
                           │
                           ▼
   ┌──────────────────────────────────────────────────┐
   │  Filling food into the container on which the label or packaging │─ S40
   │            material has been adhered                       │
   └──────────────────────────────────────────────────┘
                           │
                           ▼
   ┌──────────────────────────────────────────────────┐
   │    Second thermal treatment: retort process                │─ S50
   │         (e.g., 125℃ for 30 minutes)                        │
   └──────────────────────────────────────────────────┘
                           │
                           ▼
   ┌──────────────────────────────────────────────────┐
   │            Completion of retort food                       │─ S60
   └──────────────────────────────────────────────────┘
                           │
                           ▼
                    ┌─────────────┐
                    │     End     │
                    └─────────────┘
```

[Fig. 2]

(a)

100

x1

y

(b)

100a

x2

[Fig. 3]

(a)

4

100

4

x1

y

(b)

4

100a

4

x2

[Fig. 4]

(a)

(b)

(c)

[Fig. 5]

(a)

(b)

(c)

(d)

(e)

## INTERNATIONAL SEARCH REPORT

| International application No. |
|---|
| **PCT/KR2021/013452** |

| | |
|---|---|
| **A.** | **CLASSIFICATION OF SUBJECT MATTER** |
| | **C08J 5/18**(2006.01)i; **C08L 67/02**(2006.01)i; **B65D 81/18**(2006.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | C08J 5/18(2006.01); B29C 48/00(2019.01); B29C 48/88(2019.01); B29C 61/02(2006.01); B29C 61/06(2006.01); C08L 67/00(2006.01); C09J 7/02(2006.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 에틸렌글리콜(ethylene glycol), 디올(diol), 방향족 디카복실산(aromatic carboxylic acid), 테레프탈산(terephthalic acid), 연신(stretch), 열수축(heat shrinkable), 폴리에스테르(polyester), 필름(film), 라벨(label) |

**C.      DOCUMENTS CONSIDERED TO BE RELEVANT**

| Category* | Citation of document, with indication, where appropriate, of the relevant passages | Relevant to claim No. |
|---|---|---|
| X | KR 10-2019-0132783 A (SKC CO., LTD.) 29 November 2019 (2019-11-29)<br>See abstract; paragraphs [0020], [0051], [0052], [0093], [0094], [0113]-[0118], [0125] and [0129]; example 1; and table 1. | 1-4,6-11 |
| Y | | 5 |
| Y | KR 10-0981129 B1 (SKC CO., LTD.) 10 September 2010 (2010-09-10)<br>See claim 3; and table 3. | 5 |
| A | JP 2001-247688 A (MITSUBISHI ENGINEERING PLASTICS CORP. et al.) 11 September 2001 (2001-09-11)<br>See claims 1-7; and example 1. | 1-11 |
| A | KR 10-2013-0068928 A (TORAY ADVANCED MATERIALS KOREA INC.) 26 June 2013 (2013-06-26)<br>See claims 1-8; example 1; and table 1. | 1-11 |

☑ Further documents are listed in the continuation of Box C.          ☑ See patent family annex.

| | |
|---|---|
| \*      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **13 January 2022** | **13 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/013452**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2009-0053702 A (KOLON CORPORATION) 27 May 2009 (2009-05-27)<br>See claims 1-14. | 1-11 |
| A | JP 2009-114422 A (TOYOBO CO., LTD.) 28 May 2009 (2009-05-28)<br>See claims 1-7; and example 1. | 1-11 |

Form PCT/ISA/210 (second sheet) (July 2019)

## INTERNATIONAL SEARCH REPORT
### Information on patent family members

| International application No. |
|---|
| **PCT/KR2021/013452** |

| Patent document cited in search report | | | Publication date (day/month/year) | Patent family member(s) | | | Publication date (day/month/year) |
|---|---|---|---|---|---|---|---|
| KR | 10-2019-0132783 | A | 29 November 2019 | AU | 2018-205116 | A1 | 05 December 2019 |
| | | | | AU | 2018-205116 | B2 | 16 July 2020 |
| | | | | CN | 108908922 | A | 30 November 2018 |
| | | | | CN | 108908922 | B | 18 December 2020 |
| | | | | EP | 3572451 | A1 | 27 November 2019 |
| | | | | KR | 10-2153670 | B1 | 08 September 2020 |
| | | | | TW | 202003649 | A | 16 January 2020 |
| | | | | TW | I681989 | B | 11 January 2020 |
| | | | | US | 10994880 | B2 | 04 May 2021 |
| | | | | US | 2019-0352032 | A1 | 21 November 2019 |
| | | | | US | 2021-0221546 | A1 | 22 July 2021 |
| KR | 10-0981129 | B1 | 10 September 2010 | CN | 102190867 | A | 21 September 2011 |
| | | | | CN | 102190867 | B | 21 October 2015 |
| | | | | EP | 2365025 | A1 | 14 September 2011 |
| | | | | HK | 1160878 | A1 | 17 August 2012 |
| | | | | JP | 2011-184690 | A | 22 September 2011 |
| | | | | JP | 5971897 | B2 | 17 August 2016 |
| | | | | TW | 201139531 | A | 16 November 2011 |
| | | | | TW | I429691 | B | 11 March 2014 |
| | | | | US | 2011-0224369 | A1 | 15 September 2011 |
| | | | | US | 8632865 | B2 | 21 January 2014 |
| JP | 2001-247688 | A | 11 September 2001 | JP | 4535553 | B2 | 01 September 2010 |
| KR | 10-2013-0068928 | A | 26 June 2013 | KR | 10-1330259 | B1 | 15 November 2013 |
| KR | 10-2009-0053702 | A | 27 May 2009 | CN | 101910261 | A | 08 December 2010 |
| | | | | CN | 101910261 | B | 16 December 2015 |
| | | | | CN | 102898792 | A | 30 January 2013 |
| | | | | CN | 102898792 | B | 26 August 2015 |
| | | | | CN | 102898793 | A | 30 January 2013 |
| | | | | CN | 102898793 | B | 24 June 2015 |
| | | | | EP | 2217643 | A2 | 18 August 2010 |
| | | | | EP | 2217643 | B1 | 11 April 2018 |
| | | | | EP | 2789647 | A1 | 15 October 2014 |
| | | | | EP | 2789647 | B1 | 13 June 2018 |
| | | | | JP | 2011-503339 | A | 27 January 2011 |
| | | | | JP | 5686601 | B2 | 18 March 2015 |
| | | | | KR | 10-1262435 | B1 | 08 May 2013 |
| | | | | KR | 10-1305663 | B1 | 09 September 2013 |
| | | | | KR | 10-1317491 | B1 | 15 October 2013 |
| | | | | KR | 10-1335222 | B1 | 29 November 2013 |
| | | | | KR | 10-2009-0051709 | A | 22 May 2009 |
| | | | | KR | 10-2009-0061574 | A | 16 June 2009 |
| | | | | US | 2011-0172386 | A1 | 14 July 2011 |
| | | | | US | 9187637 | B2 | 17 November 2015 |
| | | | | WO | 2009-066928 | A2 | 28 May 2009 |
| | | | | WO | 2009-066928 | A3 | 06 August 2009 |
| JP | 2009-114422 | A | 28 May 2009 | WO | 2009-051167 | A1 | 23 April 2009 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020062838